# EUROPÄISCHE PATENTANMELDUNG

(11) **EP 3 015 402 A1**
(43) Veröffentlichungstag der Anmeldung: **04.05.2016**
(21) Anmeldenummer: 15187376.7
(22) Anmeldetag: 29.09.2015
(51) Int. Cl.: B65G 1/04

(54) **KANALFAHRZEUG**

(30) Priorität: 31.10.2014 DE 102014115879
(71) Anmelder: GaUp GmbH, 33829 Borgholzhausen (DE)
(72) Erfinder: Upmeyer, Matthias, 33829 Borgholzhausen (DE)
(74) Vertreter: Wagner, Carsten

(57) **Zusammenfassung**

Ein erfindungsgemäßes Kanalfahrzeug 2 zur Ein- und Auslagerung von Lasten in einem Regallager weist einen verfahrbaren Grundkörper 4 auf, der eine Lastaufnahmefläche 6 zur Aufnahme einer Last aufweist. Erfindungsgemäß sind Lastsicherungsmittel zur Positionssicherung einer auf der Lastaufnahmefläche aufgenommenen Last vorgesehen.

## Beschreibung

Die Erfindung betrifft ein Kanalfahrzeug der im Oberbegriff des Anspruchs 1 genannten Art zur Ein- und Auslagerung von Lasten in einem Regallager.

Derartige Kanalfahrzeuge, die auch als Satellit bzw. Satellitenfahrzeug oder als Shuttle bezeichnet werden, sind allgemein bekannt und werden zur Durchführung von Ein- oder Auslagerungsvorgängen in Kanallagern verwendet. In einem Kanallager stehen eingelagerte Lasten, entweder palettiert oder unpalettiert, auf Schienen in einem Kanal hintereinander. In den Schienen kann das entsprechend flache Kanalfahrzeug die Last unterfahren und nach Anheben transportieren, um so Einlagerungen und Auslagerungen zu vollziehen. Die bekannten Kanalfahrzeuge weisen einen Grundkörper auf, der eine Lastaufnahmefläche zur Aufnahme einer Last aufweist.

Ein derartiges Kanalfahrzeug ist beispielsweise durch EP 0 151 742 B1 bekannt.

Der Erfindung liegt die Aufgabe zugrunde, bei einem Kanalfahrzeug der im Oberbegriff des Anspruchs 1 genannten Art die Leistungsfähigkeit zu verbessern.

Dieser Aufgabe wird durch die im Anspruch 1 angegebene Erfindung gelöst.

Die Leistungsfähigkeit von Kanalfahrzeugen wird wesentlich dadurch bestimmt, wie schnell mittels des Kanalfahrzeugs Ein- und Auslagerungsvorgänge vollzogen werden können. Vor diesem Hintergrund geht die Erfindung von der Erkenntnis aus, dass ausschließlich bei relativ schweren Lasten mit relativ hoher Massenträgkeit die Geschwindigkeit des Ein- bzw. Auslagerungsvorganges durch die maximal erzielbare Fahrgeschwindigkeit des Kanalfahrzeugs bestimmt ist, die ihrerseits durch die verfügbare Antriebsleistung (Motorleistung) des Kanalfahrzeugs bestimmt ist. Demgegenüber darf bei relativ leichten Lasten mit entsprechend geringer Massenträgheit die Fahrgeschwindigkeit bei einem Ein- oder Auslagerungsvorgang unabhängig von der maximalen Fahrgeschwindigkeit des Kanalfahrzeugs nur so hoch gewählt werden, dass es während der Verfahrbewegung nicht zu einer Verschiebung der Last auf dem Kanalfahrzeug kommt.

Hiervon ausgehend liegt der Erfindung der Gedanke zugrunde, unerwünschte Bewegungen der Last während der Verfahrbewegung des Kanalfahrzeugs zu verhindern. Hierzu sieht die Erfindung Lastsicherungsmittel zur Positionssicherung einer auf der Lastaufnahmefläche aufgenommen Last vor.

Auf diese Weise sind unerwünschte Bewegungen der Last bei Verfahrbewegungen des Kanalfahrzeugs vermieden, so dass das Kanalfahrzeug auch bei relativ leichten Lasten mit relativ geringer Massenträgheit mit hoher Fahrgeschwindigkeit verfahren kann. Auf diese Weise ist die Leistung des Kanalfahrzeugs bei der Ein- oder Auslagerung von Lasten erhöht, so dass insgesamt die Lagerleistung eines Kanallagers, in dem das Kanalfahrzeug verwendet wird, erhöht ist.

Unter einer Positionssicherung der Last wird erfindungsgemäß verstanden, dass unerwünschte Lastbewegungen vermieden oder auf ein Maß reduziert sind, bei dem der Ein- oder Auslagerungsvorgang nicht behindert ist.

Entsprechend den jeweiligen Anforderungen kann es somit erfindungsgemäß ausreichend sein, wenn unerwünschte Lastbewegungen auf ein den Ein- oder Auslagerungsvorgang nicht störendes Maß reduziert sind. Eine vorteilhafte Weiterbildung der Erfindung sieht jedoch vor, dass die Lastsicherungsmittel derart ausgebildet und eingerichtet sind, dass Lastbewegungen entlang einer Verfahrachse des Kanalfahrzeugs vermieden sind.

Eine vorteilhafte Weiterbildung der Erfindung sieht eine Steuerungseinrichtung zur Ansteuerung der Lastsicherungsmittel vor, wobei die Steuerungseinrichtung derart ausgebildet und eingerichtet ist, dass die Lastsicherungsmittel während Verfahrbewegungen des Kanalfahrzeugs aktiviert sind. Bei diesem Ausführungsbeispiel kann die Ansteuerung der Lastsicherungsmittel derart erfolgen, dass die Lastsicherungsmittel zumindest während Verfahrbewegungen des Kanalfahrzeugs aktiviert sind. Hierzu ist es beispielsweise möglich, dass die Lastsicherungsmittel aktiviert werden, sobald das Kanalfahrzeug eine Last aufgenommen hat, und erst dann deaktiviert werden, wenn das Kanalfahrzeug die Last abgegeben hat. Es ist erfindungsgemäß jedoch auch möglich, dass die Ansteuerung der Lastsicherungsmittel derart erfolgt, dass diese ausschließlich während Verfahrbewegungen des Kanalfahrzeugs aktiviert, im Übrigen jedoch deaktiviert sind. Die letztgenannte Art der Ansteuerung hat den Vorteil, dass die Laststeuerungsmittel nur dann aktiviert sind, wenn sie benötigt werden, nämlich während Verfahrbewegungen des Kanalfahrzeugs. Wenn die Lastsicherungsmittel nicht benötigt werden, sind sie bei dieser Ausführungsform deaktiviert, was Energie spart.

Entsprechend den jeweiligen Anforderungen können die Lastsicherungsmittel bei jedem Ein- bzw. Auslagerungsvorgang einer Last aktiviert werden. Eine vorteilhafte Weiterbildung der Erfindung sieht jedoch vor, dass die Steuerungseinrichtung derart ausgebildet und eingerichtet ist, dass die Aktivierung der Lastsicherungsmittel in Abhängigkeit von dem Gewicht einer ein- oder auszulagernden Last erfolgt. Beispielsweise und insbesondere kann bei dieser Ausführungsform die Aktivierung der Laststeuerungsmittel nur dann erfolgen, wenn das Gewicht der Last einen vorgegebenen Wert unterschreitet und aufgrund der entsprechend geringen Massenträgheit Lastbewegungen während des Verfahrens des Kanalfahrzeuges auftreten könnten. Bei Lasten, deren Gewicht den vorgegebenen Wert überschreitet und deren Massenträgheit entsprechend so groß ist, dass während des Verfahrens des Kanalfahrzeuges auch mit maximaler Fahrgeschwindigkeit Lastbewegungen nicht auftreten, können bei dieser Ausführungsform die Lastsicherungsmittel deaktiviert bleiben. Dies spart Energie.

Die Laststeuerungsmittel können entsprechend den jeweiligen Anforderungen in vielfältiger Weise ausgebildet sein. Insoweit sieht eine vorteilhafte Weiterbildung der Erfindung vor, dass die Lastsicherungsmittel wenigstens eine mechanische Haltevorrichtung aufweisen. Beispielsweise kann eine entsprechende mechanische Haltevorrichtung so aufgebaut sein, dass die auf der Lastaufnahmefläche aufgenommene Last einerseits an einem Anschlag anliegt, der Bewegungen der Last entlang der Verfahrachse des Kanalfahrzeugs in eine Richtung verhindert. Um in der entgegengesetzten Richtung Lastbewegungen entlang der Verfahrachse zu verhindern oder zu begrenzen, kann beispielsweise ein Riegel vorgesehen sein, der bei Aktivierung der Lastsicherungsmittel ausfährt und bei deren Deaktivierung einfährt. Wenn ein- oder auszulagernde Lasten entlang der Verfahrachse stets die gleiche Ausdehnung haben, kann der Abstand des Riegels von dem Anschlag fest sein. Wenn die Ausdehnung der Lasten entlang der Verfahrachse jedoch variiert, kann der Riegel entlang der Verfahrachse verstellbar sein. Es ist erfindungsgemäß auch möglich, sowohl den Anschlag als auch den Riegel entlang der Verfahrachse verstellbar zu gestalten.

Eine außerordentlich vorteilhafte Weiterbildung der Erfindung sieht vor, dass die Lastsicherungsmittel wenigstens eine Ansaugvorrichtung zum positionssichernden Ansaugen einer auf der Lastaufnahmefläche aufgenomme Last aufweisen. Bei dieser Ausführungsform wird die Last dadurch in ihrer Position und damit gegen unerwünschte Lastbewegungen gesichert, dass sie mittels der Ansaugvorrichtung angesaugt wird. Entsprechende Ansaugvorrichtungen sind relativ einfach und kostengünstig realisierbar und ermöglichen eine zuverlässige Lastsicherung. Bei der vorgenannten Ausführungsform ist es grundsätzlich ausreichend, wenn eine einzige Ansaugvorrichtung vorgesehen ist. Um die Positionssicherung bzw. Fixierung der Last weiter zu verbessern, sieht eine vorteilhafte Weiterbildung wenigstens zwei entlang der Lastaufnahmefläche zueinander beabstandete Ansaugvorrichtungen vor.

Eine andere vorteilhafte Weiterbildung der Erfindung sieht vor, dass der Ansaugvorrichtung bzw. den Ansaugvorrichtungen wenigstens eine Vakuumpumpe zur Erzeugung eines Unterdruckes zum Ansaugen der Last zugeordnet ist. Entsprechende Vakuumpumpen stehen als relativ einfache und kostengünstige Standardbauteile mit hoher Leistung zur Verfügung.

Bei der Ausführungsform mit der Ansaugvorrichtung kann diese unmittelbar an der Lastaufnahmefläche angeordnet sein. Es ist erfindungsgemäß jedoch auch möglich, die Ansaugvorrichtung neben der Lastaufnahmefläche zu positionieren. Eine vorteilhafte Weiterbildung der Erfindung sieht insoweit vor, dass die Ansaugvorrichtung eine in der Lastaufnahmefläche angeordnete Ansaugöffnung aufweist, die von einer umlaufenden Dichtung umgeben ist, auf der beim Transport einer Last dieselbe aufsteht oder aufliegt, derart, dass die Unterseite der Last mit der Dichtung einen Unterdruckraum definiert, der über die Ansaugöffnung mit einem Unterdruck beaufschlagbar ist oder beaufschlagt wird. Bei dieser Ausführungsform begrenzt die auf der Dichtung aufstehende Fläche der Last mit der Dichtung und einem Teil der Lastaufnahmefläche, in der die Ansaugöffnung gebildet ist, einen Unterdruckraum, der zum Ansaugen der Last mit einem Unterdruck beaufschlagt wird. Durch die Dichtung ist sichergestellt, dass die Last gegen die Lastaufnahmefläche abgedichtet ist und somit in dem Unterdruckraum ein zum Ansaugen erforderlicher Unterdruck erzeugt werden kann.

Die Ausgestaltung des Kanalfahrzeugs im Hinblick auf die Aufnahme von Lasten kann in beliebiger geeigneter Weise gewählt sein. Insoweit sieht eine vorteilhafte Weiterbildung der Erfindung vor, dass das Kanalfahrzeug als Schubsatellit ausgebildet ist und eine Hubvorrichtung zum Anheben von Lasten aufweist.

Ein erfindungsgemäßes Verfahren zum Betreiben eines eine Lastaufnahmefläche aufweisendes Kanalfahrzeugs ist im Anspruch 11 angegeben. Das erfindungsgemäße Verfahren ist dadurch gekennzeichnet, dass eine ein- bzw. auszulagernde Last während Verfahrbewegungen des Kanalfahrzeugs entlang eines Verfahrweges positionsgesichert wird. Es ergeben sich sinngemäß die gleichen Vorteile, wie bei einem erfindungsgemäßen Kanalfahrzeug.

Eine Weiterbildung des erfindungsgemäßen Verfahrens sieht vor, dass die Last durch Ansaugen positionsgesichert wird. Auch insoweit ergeben sich sinngemäß die gleichen Vorteile, wie bei der entsprechenden Weiterbildung des erfindungsgemäßen Kanalfahrzeugs.

Eine erfindungsgemäße Verwendung einer Ansaugvorrichtung zum Ansaugen einer Last zur Positionssicherung einer Last an einer Lastaufnahmefläche eines Kanalfahrzeugs ist im Anspruch 13 angegeben.

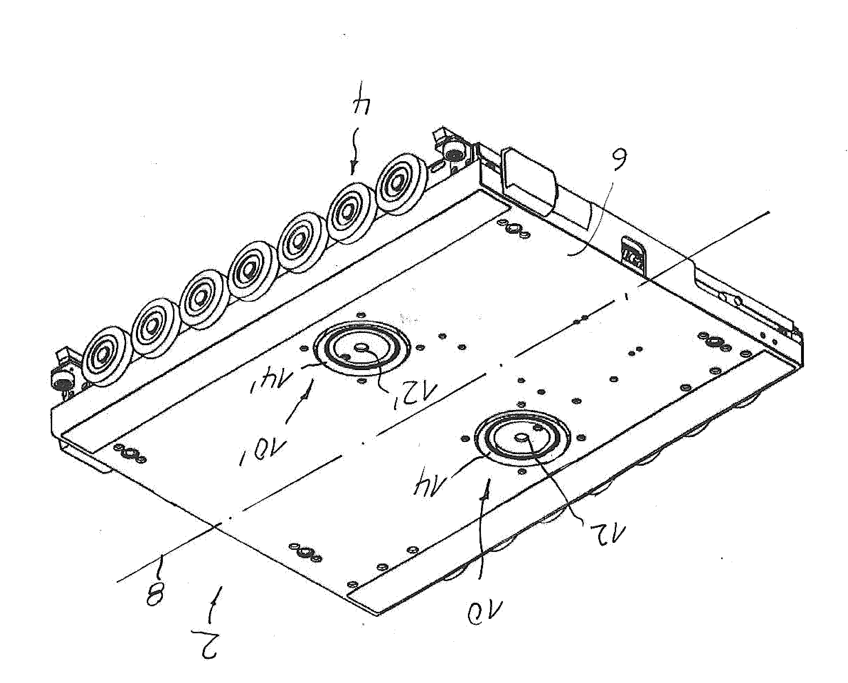

Die Erfindung wird nachfolgend anhand der beigefügten Zeichnung näher erläutert, in der ein Ausführungsbeispiel eines erfindungsgemäßen Kanalfahrzeugs dargestellt ist. Dabei bilden alle in den Patentansprüchen beanspruchten, in der Beschreibung beschriebenen und in der Zeichnung dargestellten Merkmale für sich genommen sowie in beliebiger geeigneter Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Die einzige Figur der Zeichnung zeigt ein Ausführungsbeispiel eines erfindungsgemäßen Kanalfahrzeugs.

Der grundsätzliche Aufbau eines Kanalfahrzeugs, insbesondere im Hinblick auf die zum Verfahren des Kanalfahrzeuges und zum Aufnehmen und Abgeben von Lasten erforderlichen Aggregate, ist dem Fachmann allgemein bekannt und wird daher hier nicht näher erläutert. In diesem Zusammenhang wird insbesondere auf die EP 0 151 742 B1 verwiesen, deren Offenbarungsgehalt hiermit durch Bezugnahme vollinhaltlich in die vorliegende Anmeldung aufgenommen wird.

In der Zeichnung ist ein Ausführungsbeispiel eines erfindungsgemäßen Kanalfahrzeugs 2 zur Ein- und Auslagerung von Lasten in einem Regallager dargestellt, das einen verfahrbaren Grundkörper 4 aufweist, der eine Lastaufnahmefläche 6 zur Aufnahme einer Last, die aus Darstellungsgründen in der Zeichnung nicht gezeigt ist, aufweist.

Erfindungsgemäß sind Lastsicherungsmittel zur Positionssicherung einer auf der Lastaufnahmefläche 6 aufgenommenen Last vorgesehen, die derart ausgebildet und eingerichtet sind, dass Lastbewegungen entlang einer Verfahrachse des Kanalfahrzeugs 2, die in der Zeichnung durch eine strichpunktierte Linie 8 symbolisiert ist, während Verfahrbewegungen des Kanalfahrzeugs 2 vermieden sind.

Bei dem dargestellten Ausführungsbeispiel weisen die Lastsicherungsmittel wenigstens eine Ansaugvorrichtung zum positionssichernden Ansaugen einer auf der Lastaufnahmefläche 6 aufgenommenen Last auf. Bei dem dargestellten Ausführungsbeispiel sind zwei quer zur Längsrichtung des Kanalfahrzeuges 2 zueinander beabstandete Ansaugvorrichtungen 10, 10' vorgesehen. Nachfolgend wird lediglich die Ansaugvorrichtung 10 näher erläutert. Die Ansaugvorrichtung 10' ist entsprechend aufgebaut und wird daher nicht näher erläutert.

Die Ansaugvorrichtung 10 weist eine in der Lastaufnahmefläche 6 angeordnete Ansaugöffnung 12 auf, die von einer umlaufenden Dichtung 14 (Ringdichtung) aus einem elastomeren Material umgeben ist. Beim Transport einer Last liegt dieselbe auf der Dichtung 12 auf und definiert mit der Dichtung 12 einen Unterdruckraum, der über die Ansaugöffnung 10 mit einem Unterdruck beaufschlagbar ist. Um den Unterdruckraum mit einem Unterdruck zu beaufschlagen, kommuniziert die Ansaugöffnung 10 über eine entsprechende Leitung mit einer Vakuumpumpe. Aus Gründen der Übersichtlichkeit sind diese Bauteile in der Zeichnung nicht dargestellt. Bei dem dargestellten Ausführungsbeispiel werden die Ansaugvorrichtungen 10, 10' mittels derselben Vakuumpumpe betrieben.

Zur Ansteuerung der Lastsicherungsmittel in Form der Ansaugvorrichtung 10, 10' ist eine Steuerungseinrichtung (nicht dargestellt) vorgesehen, wobei die Steuerungseinrichtung derart ausgebildet und eingerichtet ist, dass die Lastsicherungsmittel während Verfahrbewegungen des Kanalfahrzeugs 2 aktiviert sind. Bei dem dargestellten Ausführungsbeispiel werden die Ansaugvorrichtungen 10, 10' ausschließlich während Verfahrbewegungen des Kanalfahrzeugs 2 aktiviert, sind also deaktiviert, wenn sich das Kanalfahrzeug 2 in Ruhe befindet.

Bei dem dargestellten Ausführungsbeispiel ist die Steuerungseinrichtung ferner derart ausgebildet und eingerichtet, dass die Aktivierung der Lastsicherungsmittel in Abhängigkeit von dem Gewicht einer ein- oder auszulagernden Last erfolgt, und zwar derart, dass die Lastsicherungsmittel nur dann aktiviert werden, wenn das Gewicht der Last einen vorgegebenen Wert unterschreitet. Mit anderen Worten werden die Lastsicherungsmittel in Form der Ansaugvorrichtungen 10, 10' während Verfahrbewegungen des Kanalfahrzeugs 2 aktiviert, wenn auf der Lastaufnahmefläche 6 eine relativ leichte Last mit entsprechend geringer Massenträgheit aufgenommen ist.

Die Funktionsweise des erfindungsgemäßen Kanalfahrzeugs 2, die gleichzeitig ein erfindungsgemäßes Verfahren zum Betreiben des Kanalfahrzeugs 2 definiert, ist wie folgt:

Zum Einlagern einer auf der Lastaufnahmefläche 6 aufgenommenen Last wird das Kanalfahrzeug 2 beispielsweise mittels eines Regalförderzeuges vor einen Kanal eines Regals verfahren, in den die Last eingelagert werden soll. Zum Einlagern der Last steuert die Steuerungseinrichtung den Antrieb des Kanalfahrzeugs 2 an, so dass dieses entlang seiner Verfahrachse 8 in den Kanal einfährt. Handelt es sich um eine Last, deren Gewicht den vorgegebenen Wert unterschreitet, so steuert die Steuerungseinrichtung die Ansaugvorrichtungen 10, 10' von dem oder beim Anfahren des Kanalfahrzeugs 2 derart an, dass diese die Last ansaugen und damit in ihrer Position auf der Lastaufnahmefläche 6 sichern, so dass Lastbewegungen während der Verfahrbewegungen des Kanalfahrzeugs 2 vermieden sind.

Danach fährt das Kanalfahrzeug 2 mit positionsgesicherter Last in den Kanal ein. Ist der beabsichtigte Lagerplatz erreicht, so deaktiviert die Steuerungseinrichtung die Ansaugvorrichtungen 10, 10', so dass die Last durch die Ansaugvorrichtungen 10, 10' freigegeben ist. Daran anschließend kann die Last mittels einer Hubvorrichtung des Kanalfahrzeugs 2 abgesenkt und an dem gewünschten Lagerplatz abgelegt und eingelagert werden. Daran anschließend verfährt das Kanalfahrzeug 2 zurück zu dem Regalförderzeug und steht damit für einen weiteren Ein- oder Auslagerungsvorgang zur Verfügung.

Dadurch, dass die Last während Verfahrbewegungen des Kanalfahrzeugs 2 auf der Lastaufnahmefläche 6 in ihrer Position gesichert ist, kann das Kanalfahrzeug 2 auch dann mit maximaler Geschwindigkeit verfahren, wenn sich auf der Lastaufnahmefläche eine relativ leichte Last mit entsprechend relativ geringer Massenträgheit befindet. Auf diese Weise ist die Leistung des Kanalfahrzeugs 2 bei Ein- und Auslagerungsvorgängen erhöht, so dass auch insgesamt die Lagerleistung eines Kanallagers, in dem das Kanalfahrzeug 2 verwendet wird, erhöht ist.

In den verschiedenen Figuren der Zeichnung und den verschiedenen Ausführungsbeispielen sind gleiche bzw. sich entsprechende Bauteile mit den gleichen Bezugszeichen versehen. Soweit in den Figuren der Zeichnung aus Darstellungs- oder Veranschaulichungsgründen Bauteile weggelassen sind, so sind die betreffenden Bauteile jeweils den anderen Figuren sinnentsprechend zu ergänzen. Es ist für den Fachmann ersichtlich, dass die Merkmale der einzelnen Ausführungsbeispiele auch unter den Ausführungsbeispielen austauschbar sind, die in Bezug auf ein Ausführungsbeispiel offenbarten Merkmale also identisch oder sinnentsprechend auch bei den anderen Ausführungsbeispielen vorgesehen sein können. Es ist für den Fachmann ferner ersichtlich, dass die zu den einzelnen Ausführungsbeispielen offenbarten Merkmale die Erfindung jeweils für sich genommen weiterbilden, also unabhängig von den weiteren Merkmalen des jeweiligen Ausführungsbeispieles.

## Patentansprüche

1. Kanalfahrzeug (2) zur Ein- und Auslagerung von Lasten in einem Regallager,
mit einem verfahrbaren Grundkörper (4), der eine Lastaufnahmefläche (6) zur Aufnahme einer Last aufweist,
**gekennzeichnet durch**
Lastsicherungsmittel zur Positionssicherung einer auf der Lastaufnahmefläche (6) aufgenommenen Last.

2. Kanalfahrzeug nach Anspruch 1, **dadurch gekennzeichnet, dass** die Lastsicherungsmittel derart ausgebildet und eingerichtet sind, dass Lastbewegungen entlang einer Verfahrachse (8) des Kanalfahrzeugs (2) während Verfahrbewegungen des Kanalfahrzeugs (2) vermieden sind.

3. Kanalfahrzeug nach Anspruch 1 oder 2, **gekennzeichnet durch** eine Steuerungseinrichtung zur Ansteuerung der Lastsicherungsmittel, wobei die Steuerungseinrichtung derart ausgebildet und eingerichtet ist, dass die Lastsicherungsmittel während Verfahrbewegungen des Kanalfahrzeugs (2) aktiviert sind.

4. Kanalfahrzeug nach einem der vorhergehenden Ansprüche, **dadurch gekennzeichnet, dass** die Steuerungseinrichtung derart ausgebildet und eingerichtet ist, dass die Aktivierung der Lastsicherungsmittel in Abhängigkeit von dem Gewicht einer ein- oder auszulagernden Last erfolgt.

5. Kanalfahrzeug nach einem der vorhergehenden Ansprüche, **dadurch gekennzeichnet, dass** die Lastsicherungsmittel wenigstens eine mechanische Haltevorrichtung aufweisen.

6. Kanalfahrzeug nach einem der vorhergehenden Ansprüche, **dadurch gekennzeichnet, dass** die Lastsicherungsmittel wenigstens eine Ansaugvorrichtung (10, 10') zum positionssichernden Ansaugen einer auf der Lastaufnahmefläche (6) aufgenommenen Last aufweisen.

7. Kanalfahrzeug nach Anspruch 6, **dadurch gekennzeichnet, dass** wenigstens zwei entlang der Lastaufnahmefläche (6) zueinander beabstandete Ansaugvorrichtungen (10, 10') vorgesehen sind.

8. Kanalfahrzeug nach Anspruch 6 oder 7, **dadurch gekennzeichnet, dass** der Ansaugvorrichtung oder den Ansaugvorrichtungen (10, 10') wenigstens eine Vakuumpumpe zur Erzeugung eines Unterdrucks zum Ansaugen der Last zugeordnet ist.

9. Kanalfahrzeug nach einem der Ansprüche 6 bis 8,
**dadurch gekennzeichnet, dass** die Ansaugvorrichtung (10, 10') eine in der Lastaufnahmefläche (6) angeordnete Ansaugöffnung (12, 12') aufweist, die von einer umlaufenden Dichtung (14, 14') umgeben ist, auf der beim Transport einer Last dieselbe aufsteht oder aufliegt, derart, dass die Unterseite der Last mit der Dichtung (14, 14') einen Unterdruckraum definiert, der über die Ansaugöffnung (12, 12') mit einem Unterdruck beaufschlagbar ist oder beaufschlagt wird.

10. Kanalfahrzeug nach einem der vorhergehenden Ansprüche, **dadurch gekennzeichnet, dass** das Kanalfahrzeug (2) als Hubsatellit ausgebildet ist und eine Hubvorrichtung zum Anheben einer Last aufweist.

11. Verfahren zum Betreiben eines eine Lastaufnahmefläche aufweisenden Kanalfahrzeuges,
**dadurch gekennzeichnet,**
**dass** eine ein- oder auszulagernde Last während Verfahrbewegungen des Kanalfahrzeugs entlang eines Verfahrweges positionsgesichert wird.

12. Verfahren nach Anspruch 11, **dadurch gekennzeichnet, dass** die Last durch Ansaugen positionsgesichert wird.

13. Verwendung einer Ansaugvorrichtung zum Ansaugen einer Last zur Positionssicherung der Last an einer Lastaufnahmefläche eines Kanalfahrzeuges.
